# DEMANDE DE BREVET EUROPEEN

(11) **EP 1 493 910 A1**
(43) Date de publication de la demande: **05.01.2005**
(21) Numéro de dépôt: 04300327.6
(22) Date de dépôt: 23.06.2004
(51) Int. Cl.: F02F 1/42, F02B 31/02, F02B 31/08

(54) **Circuit d'admission comportant des moyens d'orientation des gaz tangentiellement au mouvement de swirl**

(30) Priorité: 30.06.2003 FR 0307857
(71) Demandeur: Renault s.a.s., 92100 Boulogne Billancourt (FR)
(72) Inventeur: Dupont, Alain, 78860 Saint Nom la Breteche (FR); Legendre, Jildaz, 75013 Paris (FR)

(57) **Abrégé**

L'invention propose une culasse (10) pour moteur à combustion interne, qui comporte un premier conduit d'admission (14) qui s'étend depuis un premier orifice d'entrée (18) jusqu'à un premier orifice de sortie (20), et
un deuxième conduit (16) d'admission qui s'étend depuis un deuxième orifice d'entrée (22) jusqu'à un deuxième orifice de sortie (24),
et dans laquelle le premier et le deuxième conduits d'admission (14, 16) sont conformés pour que le flux de gaz forme un mouvement tourbillonnaire autour de l'axe principal (A) de la chambre de combustion, caractérisée en ce que au moins le bord du premier orifice de sortie (20) du premier conduit (14) d'admission comporte une portion entaillée (32) qui s'étend sur un arc situé en aval de l'axe principal de l'orifice de sortie (20), par rapport au mouvement tourbillonnaire.

## Description

L'invention propose une culasse pour un moteur à combustion interne, dans laquelle les gaz d'admission forment un mouvement tourbillonnaire.

L'invention propose plus particulièrement une culasse pour moteur à combustion interne, comportant un premier conduit d'admission qui s'étend depuis un premier orifice d'entrée jusqu'à un premier orifice de sortie, et un deuxième conduit d'admission qui s'étend depuis un deuxième orifice d'entrée jusqu'à un deuxième orifice de sortie et dans laquelle le premier et le deuxième conduits d'admission sont conformés pour que le flux de gaz forme un mouvement tourbillonnaire autour de l'axe principal de la chambre de combustion.

Les systèmes d'admission existants permettent d'obtenir un mouvement tourbillonnaire ou "swirl" à l'aide de conduits hélicoïdaux.

Cependant, ces systèmes d'admission ont une perméabilité réduite, la perméabilité étant définie comme étant le débit de passage de l'air dans l'orifice d'entrée d'une soupape lors de son ouverture. Une perméabilité réduite entraîne une dégradation du remplissage en air des chambres de combustion du moteur, notamment en fortes charges.

Pour augmenter la perméabilité de la culasse, il a été proposé d'utiliser deux soupapes d'admission par cylindre, et de réaliser un conduit d'admission associé à chaque soupape.

Une telle structure de culasse est décrite dans le document EP-A-0.527.122, dans lequel un premier conduit d'admission s'étend depuis une face supérieure de la culasse et le deuxième conduit d'admission s'étend depuis une face transversale verticale arrière de la culasse, de manière à avoir une perméabilité suffisante quel que soit le régime de fonctionnement du moteur.

Toutefois les gaz d'admission provenant du premier conduit d'admission s'opposent en partie au mouvement tourbillonnaire.

L'invention a pour but de remédier à cet inconvénient.

Dans ce but, elle propose qu'au moins le bord du premier orifice de sortie du premier conduit d'admission comporte une portion entaillée qui s'étend sur un arc situé en aval de l'axe principal de l'orifice de sortie, par rapport au mouvement tourbillonnaire.

Selon une autre caractéristique de l'invention, le premier conduit d'admission comporte une cloison qui divise le premier conduit d'admission en deux canaux globalement parallèles.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'une culasse comportant un circuit d'admission conforme à l'invention ;
- la figure 2 est une vue en plan de dessous de la face inférieure de la culasse représentée à la figure 1 ;
- la figure 3 est une vue en section verticale selon la ligne 3-3 d'un conduit d'admission ;
- la figure 4 est une vue en section suivant le profil du premier conduit d'admission.

Pour la description de l'invention, on adoptera à titre non limitatif les orientations verticale, longitudinale et transversale selon le repère V, L, T indiqué aux figures.

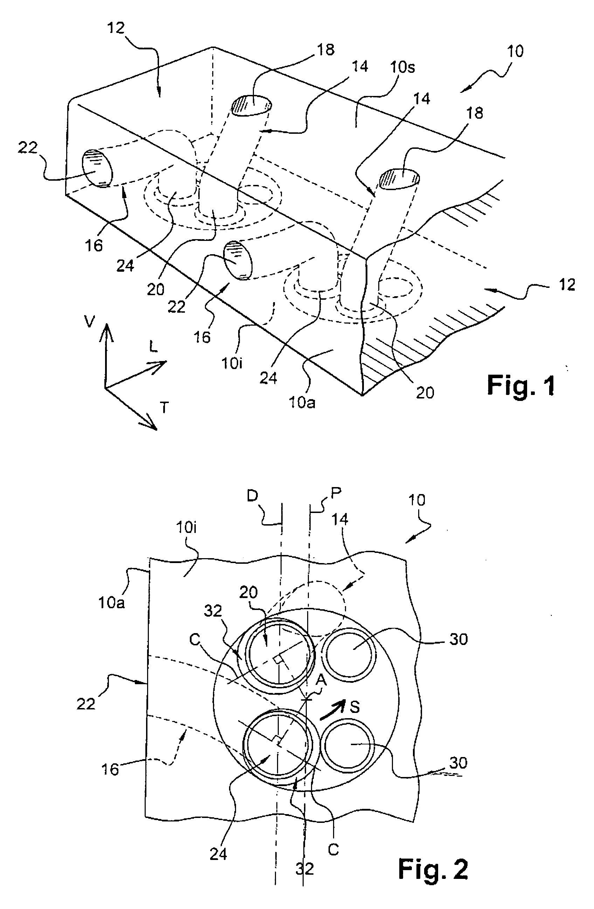

On adoptera aussi l'orientation d'arrière en avant comme étant la direction longitudinale et de gauche à droite en se reportant à la figure 1.

Sur les figures on a représenté une culasse 10 associée à un cylindre (non représenté) d'un moteur à combustion interne, par exemple d'un moteur diesel à injection directe, d'axe A sensiblement vertical. La culasse 10 est parallélépipédique. Sa face inférieure plane 10i s'étend horizontalement et délimite la partie supérieure de la chambre de combustion (non représentée) du cylindre.

La culasse 10 comporte un circuit d'admission 12 des gaz d'admission à l'intérieur de la chambre de combustion, qui est constitué de deux conduits d'admission 14, 16.

Un premier conduit d'admission 14 s'étend depuis un premier orifice d'entrée 18 situé dans la face supérieure 10s de la culasse 10, jusqu'à un premier orifice de sortie 20 situé sur la face inférieure 10i de la culasse 10, qui débouche dans la chambre de combustion.

Le deuxième conduit d'admission 16 s'étend depuis un deuxième orifice d'entrée 22 situé dans la face transversale verticale arrière 10a de la culasse 10, jusqu'à un deuxième orifice de sortie 24 situé sur la face inférieure 10i de la culasse 10, qui débouche dans la chambre de combustion.

Chaque conduit d'admission 14, 16 est obturé par une soupape d'admission (non représentée) qui s'appuie sur un siège de soupape 28 situé en amont de l'orifice de sortie, relativement au flux des gaz d'admission qui traversent le conduit d'admission.

Les premier et deuxième orifices de sortie 20, 24 sont délimités par une paroi 26 annulaire d'axe principal B vertical, qui s'étend depuis le siège de soupape 28 associé jusqu'à la face inférieure 10i de la culasse 10.

La paroi 26 est conique. Sa base est située au niveau de la face inférieure 10i de la culasse 10. Cependant, elle peut aussi être cylindrique.

La culasse 10 comporte aussi un circuit d'échappement des gaz issus de la combustion du carburant avec les gaz d'admission, représenté par les orifices d'échappement 30.

La culasse 10 est une culasse du type appelé "cross-flow", dont les orifices de sortie 20, 24 du circuit d'admission 12 sont agencés d'un même coté d'un plan P vertical transversal passant par l'axe vertical A de la culasse, et les orifices d'échappement 30 sont agencés de l'autre coté du plan P.

De plus, les orifices de sortie 20, 24 sont disposés sur la face inférieure 10i de la culasse 10 de manière que la droite horizontale D, qui passe par les centres des premier et deuxième orifice 20, 24 est d'orientation transversale, c'est-à-dire qu'elle est parallèle à la face transversale verticale arrière 10a de la culasse 10.

Enfin, les orifices de sortie 20, 24 sont disposés en arrière du plan vertical P, c'est-à-dire entre le plan P et la face verticale arrière 10a de la culasse 10.

Pour générer un mouvement tourbillonnaire de swirl, représenté sur les figures par la flèche S, les conduits d'admission 14, 16 débouchent tangentiellement dans la chambre de combustion

Dans ce but, chaque conduit est orienté de manière que les flux de gaz débouchant des premiers et deuxièmes orifices de sortie 20, 24 soient orientés vers le bas autour de l'axe vertical A de la chambre de combustion,

De plus, les premier et deuxième orifices de sortie 20, 24 sont répartis angulairement autour de l'axe vertical A de manière que le premier orifice de sortie 20 soit situé en amont du deuxième orifice 24, par rapport au mouvement tourbillonnaire.

Puisque l'orifice d'entrée 18 du premier conduit d'admission 14 est situé sur la face supérieure 10s de la culasse 10, le premier conduit d'admission 14 s'étend en majeure partie verticalement, et en moindre partie tangentiellement au mouvement tourbillonnaire.

Ainsi, le flux de gaz d'admission en sortie du premier orifice de sortie 20 est majoritairement orienté verticalement vers le bas. Ceci a pour effet que ce flux de gaz s'oppose en partie au mouvement tourbillonnaire, et donc réduit l'efficacité du mélange des gaz d'admission avec le carburant.

En vue de limiter ce phénomène dû à l'orientation des gaz d'admission provenant du premier conduit d'admission, la culasse comporte une portion entaillée 32 associée au moins au premier conduit d'admission 14, et de préférence aux deux conduits d'admission 14, 16, de manière à modifier l'orientation du flux de gaz en sortie de l'orifice de sortie 20, 24 associé.

Selon la figure 2, la portion entaillée 32 est réalisée sur le bord de l'orifice de sortie 20, 24 associé, et elle s'étend sur un arc situé en aval de l'axe B de l'orifice de sortie 20, 24 associé.

L'entaille permet d'excentrer l'orifice de sortie 20, 24 associé dans le sens du mouvement tourbillonnaire, et donc de modifier l'orientation de l'extrémité du conduit d'admission 14, 16 associé. Il en résulte que l'orientation du flux de gaz en sortie du conduit d'admission 14, 16 associé est modifiée de manière à favoriser la composante tangentielle au mouvement tourbillonnaire par rapport à la composante longitudinale.

En projection verticale sur un plan horizontal, la portion entaillée a sur la figure 2 la forme d'un croissant symétrique par rapport à un axe C orienté tangentiellement au mouvement tourbillonnaire, et qui passe par le centre de l'orifice de sortie.

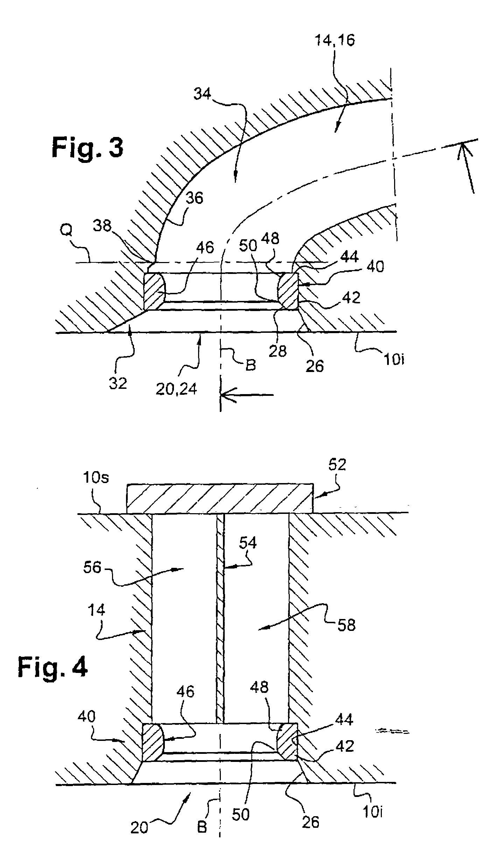

En section verticale la portion entaillée 32a est en forme de rampe (cf. la figure 3), de hauteur décroissante en s'éloignant de l'axe B de l'orifice de sortie 20, 24 associé, de manière à favoriser le mouvement tourbillonnaire.

Selon une autre variante de réalisation représentée à la figure 3, une zone avant 34 de la paroi intérieure du tronçon aval 36 d'un conduit d'admission 14, 16 comporte une nervure 38 qui s'étend dans un plan Q correspondant sensiblement à une section horizontale du conduit 14, 16 dans la zone correspondante.

La nervure 38 est par exemple réalisée dans le deuxième conduit d'admission 16. Selon un mode de réalisation préféré de l'invention, chacun des deux conduits d'admission 14 16 comporte une nervure 38.

Les nervures 38 permettent de favoriser un mouvement tourbillonnaire important des gaz admis dans la chambre de combustion sans trop diminuer la perméabilité du circuit d'admission 12. Elles permettent d'améliorer le guidage du flux de gaz lors de son entrée dans la chambre en modifiant son angle incident par rapport à la paroi cylindrique de la chambre de combustion.

Les nervures 38 peuvent être réalisées de plusieurs façons, notamment lors de la réalisation par moulage du conduit d'admission 14, 16. Dans ce cas, le noyau intérieur définissant l'intérieur du conduit d'admission 14, 16 comporte une dépouille dont la forme en saillie définit le profil de la nervure 38.

Les nervures 38 peuvent aussi être réalisée au moins partiellement par usinage de la zone avant 34 de là paroi intérieure du conduit d'admission 14, 16.

Comme on peut le voir à la figure 3, le siège de soupape 28 de chaque conduit d'admission 14, 16 est réalisé dans une bague de siège de soupape rapportée 40. La bague 40 permet de réduire le coût de réalisation du siège de soupape 28 car son usinage est plus aisé, ainsi que le traitement de la surface qui forme le siège de soupape 28. Elle comporte une surface annulaire périphérique 42 qui est reçue dans une gorge annulaire complémentaire 44 du conduit d'admission 14, 16 associé, de manière étanche aux gaz d'admission. Elle comporte aussi une surface inférieure conique qui forme le siège de soupape 28, et qui est apte à coopérer avec une face complémentaire de la soupape d'admission associée pour réaliser une obturation de manière étanche du conduit d'admission.

La bague 40 comporte avantageusement un bourrelet radial intérieur 46 qui a pour effet de réduire la section du conduit d'admission 14, 16. Il en résulte une augmentation de la vitesse des gaz d'admission par effet venturi, et donc une augmentation de la vitesse du mouvement tourbillonnaire.

Le bourrelet 46 est délimité par une première face amont convergente 48, par rapport au flux des gaz d'admission dans le conduit d'admission 14, 16, jusqu'à un plan horizontal "R" au niveau duquel la section du conduit d'admission est la plus faible, et par une face aval divergente 50 qui s'étend depuis le plan R, jusqu'au siège de soupape 28.

On a représenté à la figure 4 un autre mode de réalisation du premier conduit d'admission 14, qui comporte des moyens pour réduire le flux de gaz d'admission, de manière à favoriser la formation du mouvement tourbillonnaire.

En effet, du fait de la structure globalement verticale du premier conduit d'admission, une partie des gaz d'admission située globalement la plus proche radialement de l'axe principal A du cylindre, est orientée de manière opposée au mouvement tourbillonnaire, ce qui a pour effet de limiter la vitesse du mouvement tourbillonnaire.

Le premier conduit d'admission comporte un dispositif d'obturation 52 agencé au niveau de l'orifice d'entrée 18 qui est apte à obturer une partie du conduit d'admission 14, par exemple un système à guillotine ou un système à clapet rotatif. Ce dispositif d'obturation 52 est apte à obturer la partie du conduit située radialement la plus proche de l'axe A de la chambre de combustion.

Selon un autre mode de réalisation, le premier conduit d'admission 14 comporte une cloison 54 qui s'étend depuis l'orifice d'entrée 18 jusqu'à une zone amont par rapport au siège de soupape 28, en suivant la direction générale du conduit 14 en le divisant en deux canaux 56, 58 globalement parallèles.

La cloison 54 est disposée dans le premier conduit d'admission de manière que les extrémités de sortie des canaux 56, 58 soient réparties radialement par rapport à l'axe principal A de la chambre de combustion. De préférence, la cloison est réalisée venue de matière par moulage de la culasse 10, cependant, elle peut aussi être réalisée par tout mode de réalisation adapté.

Ces canaux sont associés au dispositif d'obturation 52 de manière que le canal 56, dont l'extrémité est la plus proche de l'axe A, puisse être obturé par le dispositif d'obturation en fonction du point de fonctionnement du moteur.

Le circuit d'admission 12 conforme à l'invention permet de former un mouvement tourbillonnaire, bien que l'un des conduits d'admission, ici le conduit amont 14, s'étende depuis la face supérieure 10s de la culasse 10 jusqu'à la face inférieure 10i, c'est-à-dire, selon une direction sensiblement verticale.

## Revendications

1. Culasse pour moteur à combustion interne, du type comportant
un premier conduit d'admission (14) qui s'étend depuis un premier orifice d'entrée (18) jusqu'à un premier orifice de sortie (20), et
un deuxième conduit (16) d'admission qui s'étend depuis un deuxième orifice d'entrée (22) jusqu'à un deuxième orifice de sortie (24) et dans laquelle le premier et le deuxième conduits d'admission (14, 16) sont conformés pour que le flux de gaz forme un mouvement tourbillonnaire autour de l'axe principal (A) de la chambre de combustion, **caractérisée en ce que** au moins le bord du premier orifice de sortie (20) du premier conduit (14) d'admission comporte une portion entaillée (32) qui s'étend sur un arc situé en aval de l'axe principal de l'orifice de sortie (20), par rapport au mouvement tourbillonnaire.

2. Culasse selon la revendication 1, **caractérisée en ce que** le premier et le deuxième conduits (14, 16) d'admission comportent chacun une portion entaillée (32).

3. Culasse selon la revendication 1 ou 2, **caractérisée en ce que** la portion entaillée (32) est globalement en forme de croissant symétrique par rapport à un axe (C) qui passe par le centre de l'orifice de sortie (20, 24) associé et qui est orienté tangentiellement par rapport au mouvement tourbillonnaire.

4. Culasse selon la revendication 1, 2 ou 3, **caractérisée en ce qu'**une zone avant (34), par rapport à la direction de l'écoulement des gaz dans le conduit (14, 16), de la paroi intérieure d'un tronçon aval d'au moins le deuxième conduit (16) d'admission comporte une nervure (38) qui s'étend dans un plan (Q) correspondant sensiblement à une section horizontale du conduit (14, 16).

5. Culasse selon l'une des revendications précédentes, **caractérisée en ce que** chaque siège de soupape (28) est réalisé dans une bague de siège de soupape rapportée (40) qui comporte un bourrelet radial intérieur (46) de rétrécissement de la section du conduit (14, 16).

6. Culasse selon l'une quelconque des revendications précédentes, **caractérisée en ce que** un dispositif d'obturation (52) est agencé au niveau de l'orifice d'entrée (18) du premier conduit (14) d'admission, pour obturer au moins en partie le conduit d'admission (14).

7. Culasse selon la revendication 6, **caractérisée en ce que** le dispositif d'obturation (52) obture la partie du conduit d'admission (14) la plus proche de l'axe de la chambre de combustion.

8. Culasse selon l'une des revendications précédentes, **caractérisée en ce que** le premier conduit (14) d'admission comporte une cloison (54) qui divise le premier conduit (14) d'admission en deux canaux (56, 58) globalement parallèles.

9. Culasse selon la revendication 8, **caractérisée en ce que** les canaux parallèles (56, 58) sont agencés de manière que leurs extrémités qui débouchent au niveau du premier orifice de sortie (20) sont réparties radialement par rapport à l'axe (A) de la chambre de combustion.

10. Culasse selon la revendication 9 prise en combinaison avec la revendication 6, **caractérisée en ce que** le dispositif d'obturation (52) est apte à obturer celui des canaux (56) dont l'extrémité débouchante est la plus proche de l'axe (A) de la chambre de combustion.

11. Culasse selon l'une des revendications précédentes, **caractérisée en ce que** le premier et le deuxième orifice de sortie (24) sont situés d'un même coté d'un plan vertical (P) transversal radial de la culasse (10), et entre ce plan (P) et ladite face transversale arrière (10a) de la culasse (10).

12. Culasse selon la revendication 11, **caractérisée en ce que** la droite (D) passant par les centres des premier et deuxième orifices est parallèle à la face transversale verticale arrière (10a) de la culasse (10).
